# DEMANDE DE BREVET EUROPEEN

(11) **EP 0 573 319 A1**
(43) Date de publication de la demande: **08.12.1993**
(21) Numéro de dépôt: 93401177.6
(22) Date de dépôt: 07.05.1993
(51) Int. Cl.: G01S 13/93, H01Q 19/17, H01Q 1/32

(54) **Antenne hyperfréquence pour système émetteur-récepteur de véhicule**

(30) Priorité: 19.05.1992 FR 9206042
(71) Demandeur: THOMSON-CSF, 75008 Paris (FR)
(72) Inventeur: Avignon, Bruno, F-92402 Courbevoie Cedex (FR); Canal, Yves, F-92402 Courbevoie Cedex (FR)
(74) Mandataire: Albert, Claude

(57) **Abrégé**

L'invention concerne une antenne hyperfréquence à faibles coût et encombrement pour système émetteur et/ou récepteur de véhicule.

L'antenne est réalisée en disposant les éléments rayonnants (70) dans au moins un des espaces occupés par les feux et/ou phares du véhicule. Ces éléments rayonnants peuvent être des dipôles formés par métallisation sur l'optique (43) fermant l'enveloppe (40) du phare et celle-ci peut servir de réflecteur, vers l'avant, de l'énergie électromagnétique.

L'invention s'applique notamment aux antennes pour radar anti-collision pour véhicules automobiles.

## Description

La présente invention se rapporte à une antenne hyperfréquence à faibles coût et encombrement pour système émetteur et/ou récepteur de véhicule équipé de feux et/ou phares.

L'accroissement de la densité de circulation des véhicules, notamment sur route, et les risques croissants de collision qui en découlent ont amené à effectuer de nombreuses études de systèmes anti-collision basés en particulier sur l'utilisation de radars frontaux sur les véhicules pour détecter les obstacles. Pour que ces radars ne surveillent que la route empruntée par le véhicule, il faut que le faisceau émis ait une largeur de quelques mètres à une centaine de mètres, soit quelques degrés. Compte tenu de la place allouée à l'antenne à l'avant d'un véhicule, on en concluait qu'on ne pouvait obtenir la directivité d'antenne souhaitée qu'à condition d'utiliser des fréquences d'au moins quelques dizaines de gigahertz.

Or, à ces fréquences relativement élevées, la réalisation d'un radar peut présenter des problèmes.

D'autre part, il a déjà été suggéré de prévoir sur les véhicules des moyens d'échanges d'information qui peuvent nécessiter la présence d'antennes hyperfréquences à l'avant et à l'arrière des véhicules.

Dans tous les cas, on sait que les constructeurs, notamment automobiles, répugnent à modifier la forme et la ligne des véhicules qu'ils ont soigneusement étudiées en fonction d'impératifs divers d'aérodynamique et d'aspect extérieur, d'encombrement et de logement des divers éléments constitutifs.

L'invention a pour objet une antenne hyperfréquence de faibles coût et encombrement qui ne nécessite aucune modification dans la carrosserie du véhicule, tout en permettant un fonctionnement en fréquence relativement basse grâce à la réalisation d'une surface apparente importante.

Un autre objet de l'invention est une antenne hyperfréquence mettant à profit l'existence des feux et/ou des phares sur un véhicule pour supprimer toute surface supplémentaire nécessaire à l'antenne, tout en réalisant une antenne dont la surface apparente peut être égale à la totalité de la face avant ou arrière du véhicule.

Selon l'invention, il est donc prévu une antenne hyperfréquence à faibles coût et encombrement pour système émetteur et/ou récepteur de véhicule équipé de feux et/ou phares comportant une enveloppe formant réflecteur de lumière fermée par une optique en matériau transparent, ladite antenne comprenant au moins un élément rayonnant et des moyens réflecteurs, caractérisée en ce que le ou lesdits éléments rayonnants sont formés et disposés dans au moins un des espaces occupés par lesdits feux et/ou phares, à l'écart du foyer dudit réflecteur de lumière.

Une telle antenne hyperfréquence est particulièrement avantageuse pour la réalisation de radars anti-collision pour véhicules automobiles mais aussi pour tout autre type de véhicule comportant des feux et/ou des phares. Par ailleurs, l'invention est également très avantageuse pour la réalisation peu coûteuse de radars de guidage routier ainsi que par exemple de liaisons hertziennes entre véhicules.

L'invention sera mieux comprise et d'autres caractéristiques et avantages apparaîtront à l'aide de la description ci-après et des dessins joints où :
- la figure 1 est une vue schématique montrant le principe d'un système anti-collision routier de type connu ;
- la figure 2 est un schéma d'un phare de véhicule automobile avec un premier mode de réalisation de l'invention ;
- la figure 3 montre un autre mode de réalisation de l'invention ; et
- la figure 4 montre, vu de face, un élément du mode réalisation de la figure 3.

A titre d'exemple et pour la clarté de l'explication, on va choisir le cas d'un système radar anti-collision pour véhicule automobile.

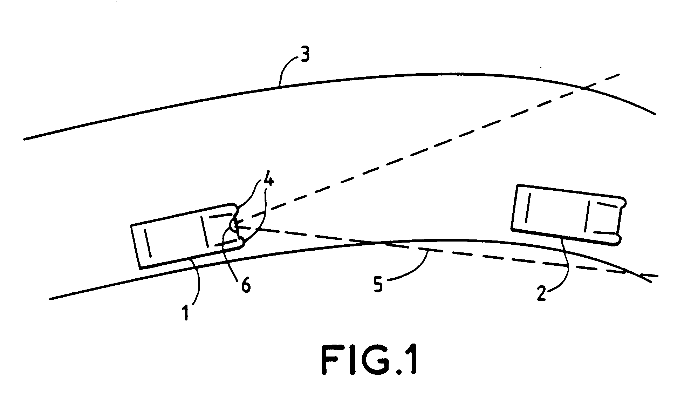

La figure 1 montre sur une route 3 deux véhicules 1 et 2 se suivant. En cas de mauvaise visibilité par exemple, il est apparu très utile que le conducteur d'une voiture puisse obtenir des informations sur les obstacles présents en avant de son véhicule, notamment sur la présence d'autres véhicules, en marche ou à l'arrêt, à courte distance. Pour cela, il a été proposé d'équiper chaque véhicule d'un radar frontal émettant un faisceau étroit (5 sur la figure 1 pour le véhicule 1) permettant la détection des obstacles. Un tel système radar implique de disposer sur la face avant du véhicule 1 une antenne hyperfréquence 6 permettant de rayonner le faisceau 5. Cette antenne, comme on l'a dit, ne dispose que de peu de place et on doit donc fonctionner à des fréquences de quelques dizaines de gigahertz pour obtenir la directivité voulue.

Or, tout véhicule automobile est équipé sur sa face avant de phares 4 permettant l'éclairage de la route de nuit et la signalisation du véhicule de nuit comme de jour en cas de mauvaise visibilité. De même sur sa face arrière, il est équipé de feux arrière de signalisation ou de stops. En outre à l'avant et à l'arrière, il dispose de feux de changement de direction. Tous ces feux et/ou phares comprennent un réflecteur optique (en général une parabole métallique ou métallisée) et une optique en matériau transparent venant fermer l'espace en avant du réflecteur.

L'invention est basée sur l'idée d'utiliser les espaces occupés par lesdits feux et/ou phares pour y disposer des antennes hyperfréquence n'empiétant donc pas sur les faces avant ou arrière du véhicule mais prévues pour atténuer au minimum l'énergie lumineuse délivrée par lesdits feux et/ou phares.

Si l'on équipe ainsi chacun des deux phares (ou plus s'il y a plus de deux phares ou feux), l'association de ces antennes permet soit leur utilisation en réseau, soit l'emploi séquentiel de chacun d'entre elles.

Dans chacun de ces cas, l'antenne résultante présente une dimension apparente voisine de la largeur du véhicule, ce qui permet d'utiliser une fréquence nettement plus faible, par exemple quelques gigahertz, tout en obtenant la directivité souhaitée.

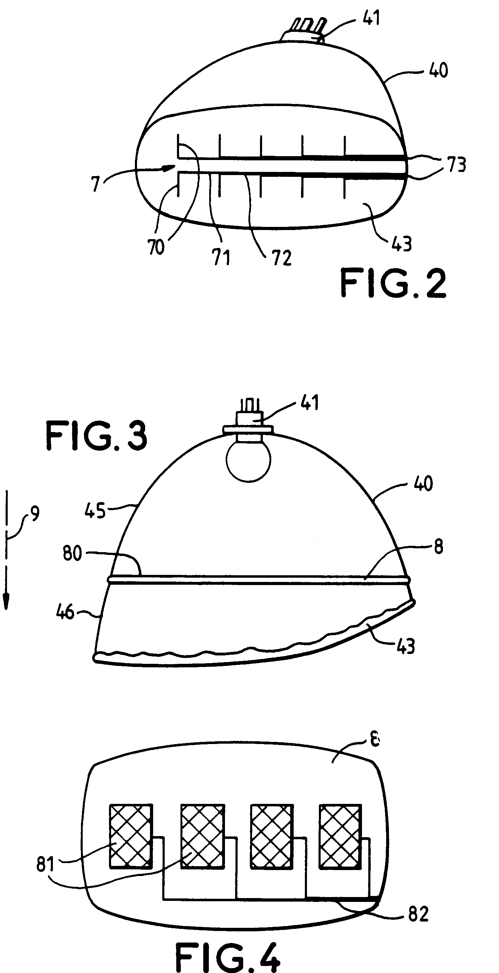

La figure 2 représente un premier mode de réalisation de l'invention. L'antenne 7 selon l'invention comprend des éléments rayonnants constitués par des dipôles, tel 70, qui sont formés sur l'optique 43 d'un phare ayant une enveloppe 40 qui forme le réflecteur optique, généralement parabolique, du phare. Ce phare porte une ampoule 41 fournissant l'énergie lumineuse nécessaire, comme cela est bien connu.

Dans l'exemple représenté, on a choisi de prévoir cinq dipôles disposés en réseau linéaire pour former une antenne réseau. Comme dans toute antenne réseau classique, l'intervalle entre deux sources rayonnantes adjacentes est choisi inférieur ou égal à le demi-longueur d'onde de fonctionnement. Les dipôles sont alimentés à l'aide d'une ligne bifilaire connectée à l'entrée bifilaire 73 et comportant des tronçons 71, 72 de largeur différente pour assurer une répartition correcte de la puissance. Les dipôles 70 et la ligne 71, 72 peuvent être réalisés par métallisation sur la surface (interne ou externe) de l'optique 43 (qui est par exemple en verre), ceci par toute technique de métallisation et de gravure connue. Compte tenu de l'écartement et de la finesse des éléments rayonnants, il est clair que leur effet sur la transmission de l'énergie lumineuse par l'optique 43 peut être négligé. L'énergie hyperfréquence rayonnée vers l'arrière à l'intérieur de l'enveloppe 40 est réfléchie vers l'avant par des moyens réflecteurs qui peuvent être constitués soit par le réflecteur optique lui-même soit par un réflecteur spécifique placé convenablement dans l'enveloppe 40 et réalisé de manière à perturber le moins possible la transmission de l'énergie lumineuse, ainsi qu'on le verra ultérieurement. Comme on le voit, il n'est pas du tout nécessaire de placer les éléments rayonnants au foyer du réflecteur optique parabolique 40, ceci ayant l'avantage de minimiser encore les perturbations éventuelles dans le fonctionnement optique du phare.

Bien entendu, au lieu d'un réseau linéaire, il est possible de prévoir plusieurs rangs parallèles de dipôles pour réaliser un réseau deux plans.

La figure 3 représente un autre mode de réalisation selon l'invention. On a représenté un phare comportant une enveloppe 40 formant réflecteur optique parabolique 45 prolongé par une partie 46. L'enveloppe 40 est fermée par une optique en matériau transparent 43, par exemple en verre. On dispose dans le phare, entre les parties 45 et 46, un substrat 8 en diélectrique transparent (par exemple en verre mais cela n'est pas limitatif). Ce substrat est disposé dans un plan sensiblement perpendiculaire à l'axe longitudinal 9 du véhicule, bien que cela ne soit pas obligatoire.

Sur la face avant du substrat sont formés des éléments rayonnants qui peuvent être des dipôles comme dans le cas de la figure 2.

Dans l'exemple choisi, où le substrat est représenté vu de face sur la figure 4, on considère le cas d'éléments rayonnants formés de pastilles conductrices 81 ("patch" dans la littérature anglo-saxonne). Ces pastilles sont associées à un plan de masse 80 formé sur l'autre face du substrat (Figure 3). Pour que ces éléments rayonnants et ce plan de masse ne perturbent que faiblement la transmission de l'énergie lumineuse, ils sont réalisés par exemple à l'aide d'un treillis conducteur formé de toute manière connue sur le substrat, par exemple par dépôt d'une métallisation ou par gravure d'une couche métallisée.

Les pastilles sont organisées en antenne réseau et sont alimentées de préférence par une ligne microruban 82.

De tels modes de réalisation permettent comme on le voit, d'équiper des phares mais aussi n'importe quel feu de signalisation (clignotant, feux arrière, stops ...) et de former des antennes réseaux dont la surface équivalente est égale à celle de la face avant ou arrière du véhicule si on associe de telles antennes placées dans chacun des phares et/ou feux. On peut ainsi obtenir une directivité suffisante, même à des fréquences relativement basses dans les hyperfréquences.

Il est clair cependant que si on voulait fonctionner en ondes millimétriques, la surface couverte par les éléments rayonnants pourrait être beaucoup plus réduite et qu'on pourrait y associer un récepteur spécifique ne nécessitant qu'une petite surface et pouvant donc être logé facilement en avant de l'ampoule dans le feu et/ou phare, sans perturber le fonctionnement optique de celui-ci.

Bien qu'on ait envisagé le cas d'un radar anti-collision, il est évident que de telles antennes hyperfréquences pourraient être utilisées à d'autres fins, telles que par exemple des liaisons hertziennes.

Bien entendu, les exemples de réalisation décrits ne sont pas limitatifs de l'invention et l'on pourrait imaginer d'autres modes de réalisation sans sortir du cadre de l'invention, du moment que ces antennes sont disposées dans le ou les espaces occupés par les feux et/ou phares du véhicule.

## Revendications

1. Antenne hyperfréquence à faibles coût et encombrement pour système émetteur et/ou récepteur de véhicule équipé de feux et/ou phares comportant une enveloppe formant réflecteur de lumière (40) fermée par une optique en matériau transparent (43), ladite antenne comprenant au moins un élément rayonnant et des moyens réflecteurs, caractérisée en ce que le ou les dits éléments rayonnants (70; 81) sont formés et disposés dans au moins un des espaces occupés par lesdits feux et/ou phares (40, 43), à l'écart du foyer dudit réflecteur de lumière.

2. Antenne hyperfréquence selon la revendication 1, caractérisée en ce que lesdits éléments rayonnants (70) sont formés sur la surface de ladite optique (43).

3. Antenne hyperfréquence selon la revendication 2, caractérisée en ce que le ou lesdits éléments rayonnants (70) sont constitués par une métallisation sur ladite surface.

4. Antenne hyperfréquence selon la revendication 1, caractérisée en ce que le ou lesdits éléments rayonnants (81) sont formés sur un substrat (8) diélectrique sensiblement plan et transparent, disposé à l'intérieur de ladite enveloppe (40).

5. Antenne hyperfréquence selon la revendication 4, caractérisée en ce que le ou lesdits éléments rayonnants (81) sont constitués par une métallisation sur au moins une face dudit substrat (8).

6. Antenne hyperfréquence selon l'une quelconque des revendications 1 à 5, caractérisée en ce que lesdits moyens réflecteurs de l'antenne sont constitués par ledit réflecteur de lumière (40 ; 45).

7. Antenne hyperfréquence selon l'une quelconque des revendications 1 à 5, caractérisée en ce que lesdits moyens réflecteurs de l'antenne sont constitués par un réflecteur spécifique placé à l'intérieur de ladite enveloppe (40) derrière lesdits éléments rayonnants (70 ; 81) par rapport à ladite optique (43).

8. Antenne hyperfréquence selon l'une des revendications 4 ou 5, caractérisée en ce que lesdits moyens réflecteurs sont constitués par un plan de masse (80) formé sur la face dudit substrat (8) non tournée vers ladite optique.

9. Antenne hyperfréquence selon l'une quelconque des revendications 4, 5 ou 8, caractérisée en ce que ledit substrat (8) est placé à l'intérieur de ladite enveloppe (40) dans un plan sensiblement perpendiculaire à l'axe longitudinal (9) du véhicule.

10. Antenne hyperfréquence selon l'une quelconque des revendications 2 à 9, caractérisée en ce que lesdits éléments rayonnants sont des dipôles (70) disposés en réseau.

11. Antenne hyperfréquence selon la revendication 10, caractérisée en ce que lesdits dipôles (70) sont alimentés par lignes bifilaires hyperfréquence (71, 72, 73) formées sur la surface portant lesdits dipôles.

12. Antenne hyperfréquence selon l'une quelconque des revendications 2 à 9, caractérisée en ce que lesdits éléments rayonnants sont des pastilles (81) disposées en réseau.

13. Antenne hyperfréquence selon la revendication 12, caractérisée en ce que lesdites pastilles (81) sont alimentées par ligne microruban (82) formée sur le support portant lesdites pastilles.

14. Antenne hyperfréquence selon l'une des revendications 12 ou 13, caractérisée en ce que lesdites pastilles sont formées par un treillis conducteur permettant le passage de la lumière

15. Antenne hyperfréquence selon l'une quelconque des revendications 7 à 9 ou 12 à 14, caractérisée en ce que ledit réflecteur est formé par un treillis conducteur permettant le passage de la lumière.
